# EUROPÄISCHE PATENTSCHRIFT

(11) **EP 1 744 474 B1**
(45) Veröffentlichungstag und Bekanntmachung des Hinweises auf die Patenterteilung: **06.08.2008**
(21) Anmeldenummer: 06012811.3
(22) Anmeldetag: 22.06.2006
(51) Int. Cl.: H04B 7/26, H04Q 7/30

(54) **Basisstation eines gemäss TDMA (Time Division Multiple Access) betriebenen Kommunikationssystems**
Base station for a TDMA communication system
Station de base pour un système de communication TDMA

(30) Priorität: 14.07.2005 DE 102005032873
(43) Veröffentlichungstag der Anmeldung: 17.01.2007
(73) Patentinhaber: ABB AG, 68309 Mannheim (DE)
(72) Erfinder: Steigmann, Richard, 67229 Gerolsheim (DE); Vefling, Harald, 3140 Borgheim (NO); Endresen, Jan, 1341 Slependen (NO); Schelling, Ralph, 67065 Ludwigxhafen (DE)
(74) Vertreter: Miller, Toivo

(56) Entgegenhaltungen:
- WO-A2-02/23793
- DE-A1- 10 334 873
- US-B1- 6 275 475

## Beschreibung

Die Erfindung bezieht sich auf eine Basisstation eines gemäß TDMA (Time Division Multiple Access) betriebenen Kommunikationssystems gemäß dem Oberbegriff des Anspruchs 1.

Die Erfindung kann insbesondere zur drahtlosen Informationsübertragung mittels Hochfrequenzsignalen bei einem Industrieroboter, einem Herstellungsautomaten oder Fertigungsautomaten verwendet werden, welcher eine Vielzahl von Näherungssensoren/Näherungsschaltern aufweist. Die Erfindung ermöglicht eine drahtlose Informationsübertragung zwischen einer Basisstation mit angeschlossenem Prozessrechner und einer Vielzahl von Teilnehmern, beispielsweise Näherungssensoren/Näherungsschaltern. Als Teilnehmer können beispielsweise auch Temperaturmesssensoren, Druckmesssensoren, Strommesssensoren oder Spannungsmesssensoren, mikromechanische, piezoelektrische, elektrochemische, magnetostriktive, elektrostriktive, elektrostatische oder elektromagnetische Aktoren oder Anzeigeelemente verwendet werden.

Außer bei Industrierobotern, Herstellungsautomaten und Fertigungsautomaten kann die Erfindung auch bei Automationssystemen, Steuer/Regelsystemen, Fernsteuersystemen, Schutz- und Sicherheitssystemen (beispielsweise bei Freiluft- oder Innenraum-Schaltanlagen), Alarmsystemen, Zustandsüberwachungs-Systemen, in der Robotertechnik oder ganz allgemein bei Maschinen/Maschinensystemen zum Einsatz gelangen.

Aus der DE 103 34 873 A1 ist ein Verfahren zum Betrieb eines Systems gemäß TDMA mit einer Vielzahl Knoten und einer an einen Zentralrechner angeschlossenen Basisstation bekannt, welches in einer Maschine oder Anlage, wie Industrieroboter installiert ist, wobei zyklische TDMA-Datenübertragungsblöcke übertragen werden und sich jeder TDMA-Datenübertragungsblock aus sukzessive nacheinander folgenden Zeitschlitzen zusammensetzt. Die Uplink Signale von den unterschiedlichen Knoten zu der Basisstation können gleichzeitig auf zwei, drei oder mehr unterschiedlichen Frequenzen gesendet werden, während die Downlink Signale von der Basisstation zu den unterschiedlichen Knoten auf lediglich einer, von den Uplink Frequenzen unterschiedlichen Frequenz gesendet werden. Die Zeitschlitze und die unterschiedlichen Uplink Frequenzen der unterschiedlichen Knoten werden einmal festgelegt und danach beibehalten. Die Funktionsweise der Basisstation ermöglicht den gleichzeitigen Empfang von zwei, drei oder mehr unterschiedlichen Frequenzen entsprechend den Frequenzen der uplink Signale. Im einfachsten Fall bedeutet dies, dass zwei, drei oder mehr separate Empfänger - jeweils zum Empfang einer festen Frequenz eingestellt - vorgesehen sind.

Aus der WO 02/23793 A2 ist ein mobiles Kommunikationssystem mit einem Duplex-Kommunikationsprotokoll gemäß Frequency Division Duplex FDD bekannt, wobei die Kommunikation zwischen einer Basisstation und einem Knoten wahlweise in Halbduplex-Betrieb oder Vollduplex-Betrieb erfolgen kann.

Aus der US-B1-6 275 475 sind Verfahren für Time Division Duplex Systemen TDD (Zeitduplex) bekannt, wobei mindestens ein Plattform-Paar synchronisiert miteinander kommuniziert. Die erste Kommunikationsplattform sendet erste Datenmengen während eines ersten Rahmens und empfängt zweite Datenmengen während eines zweiten Rahmens. Die zweite Kommunikationsplattform empfängt dritte Datenmengen während des ersten Rahmens und sendet vierte Datenmengen während des zweiten Rahmens. Zum Empfang der ersten Datenmenge, Senden der zweiten Datenmenge, Senden der dritten Datenmenge und Empfang der vierten Datenmenge dient mindestens eine TDD Subsciber Unit. Die Kommunikation zwischen den Kommunikationsplattformen und der TDD Subsciber Unit erfolgt unter Nutzung von Frequency Division Multiple Access FDMA und / oder Time Division Multiple Access TDMA und / oder Code Division Multiple Access CDMA.

In der DE 199 26 799 A1 wird ein System für eine eine Vielzahl von drahtlosen Näherungssensoren aufweisende Maschine, insbesondere Fertigungsautomat, vorgeschlagen, wobei
- jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Näherungssensoren mit elektrischer Energie vorgesehen ist,
- und wobei jeder Näherungssensor mit einer Sendeeinrichtung ausgestattet ist, welche interessierende Sensor-Informationen beinhaltende Funksignale an eine zentrale, mit einem Prozessrechner der Maschine verbundene Basisstation abgibt.

Bei diesem drahtlosen System entfällt im Vergleich zu konventionellen Lösungen mit Draht/Kabelanschluss zur elektrischen Energieversorgung und zur Kommunikation der durch Planung, Material, Installation, Dokumentation und Wartung bedingte relativ hohe Kostenfaktor der Draht/Kabelanschlüsse. Es können keine Ausfälle aufgrund von Kabelbrüchen oder schlechten, beispielsweise korrodierten. Kontakten auftreten.

In der DE 199 26 562 A1 werden ein Verfahren und eine Anordnung zur drahtlosen Versorgung einer Vielzahl Aktoren mit elektrischer Energie, ein Aktor und eine Primärwicklung hierzu sowie ein System für eine eine Vielzahl von Aktoren aufweisende Maschine vorgeschlagen, wobei die vorgeschlagene Technologie bezüglich Energieversorgung und Kommunikation gleichartig der vorstehend für die DE 199 26 799 A1 angegebenen Technologie ist.

Für die Funkübertragung wird dabei die TDMA-Technologie (Time Division Multiple Access) eingesetzt, bei der die Informationen von/zu den Aktoren bzw. Sensoren (Knoten) in Form zyklischer TDMA-Datenübertragungsblöcke übermittelt wird, wobei jedem Sensor/Aktor sowohl für Downlink als auch für Uplink ein bestimmter Zeitschlitz innerhalb eines Datenübertragungsblockes zugeordnet ist.

Der Erfindung liegt die Aufgabe zugrunde, eine Basisstation eines gemäß TDMA (Time Division Multiple Access) betriebenen Kommunikationssystems der eingangs genannten Art anzugeben, welche eine störungsfreie und dynamische Kommunikation sicherstellt.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass im Vergleich zu einer Basisstation mit abwechselndem Sendebetrieb und Empfangsbetrieb eine störungsfreiere, dynamischere Kommunikation gewährleistet ist, da gleichzeitig Signale empfangen und gesendet werden können. Vorteilhaft sind handelsübliche, preiswerte Standardkomponenten einsetzbar, wodurch eine aufwendige Entwicklung von HF-Modulen entfällt. Das TDMA-Kommunikationssystem kann hinsichtlich seiner Systemkapazität variabel gestaltet werden, d. h. die Anzahl der in der Basisstation eingesetzten Duplex-Funk-Sender/Empfänger und somit der Anzahl der Downlink-Gruppen und Uplink-Gruppen richtet sich nach der Anzahl der Knoten des Systems. Wird das System zu einem späteren Zeitpunkt um weitere Knoten erweitert, könnte die Basisstation mit einem weiteren Duplex-Funk-Sender/Empfänger ausgestattet werden.

Weitere Vorteile sind aus der nachstehenden Beschreibung ersichtlich.

Eine vorteilhafte Ausgestaltungen der Erfindung ist im Unteranspruch gekennzeichnet.

Die Erfindung wird nachstehend anhand des in der Zeichnung dargestellten Ausführungsbeispieles erläutert. Es zeigen:
- Fig. 1: ein TDMA-Kommunikationssystem mit zwei Duplex-Funk-Sender/Empfängern zu einem bestimmten Zeitpunkt t1,
- Fig. 2: das TDMA-Kommunikationssystem mit zwei Duplex-Funk-Sender/Empfängern zu einem bestimmten Zeitpunkt t1 + t_{framelänge},
- Fig. 3: das TDMA-Kommunikationssystem mit drei Duplex-Funk-Sender/Empfängern zu einem bestimmten Zeitpunkt t1,
- Fig. 4: ein TDMA-Kommunikationssystem mit drei Duplex-Funk-Sender/Empfängern zu einem bestimmten Zeitpunkt t1 + t_{framelänge},
- Fig. 5: ein TDMA-Kommunikationssystem mit vier Duplex-Funk-Sender/Empfängern zu einem bestimmten Zeitpunkt.

Allgemein bestehen die nachfolgend betrachteten TDMA-Kommunikationssysteme aus zumindest einer Downlink-Gruppe und einer oder mehreren Uplink-Gruppen.

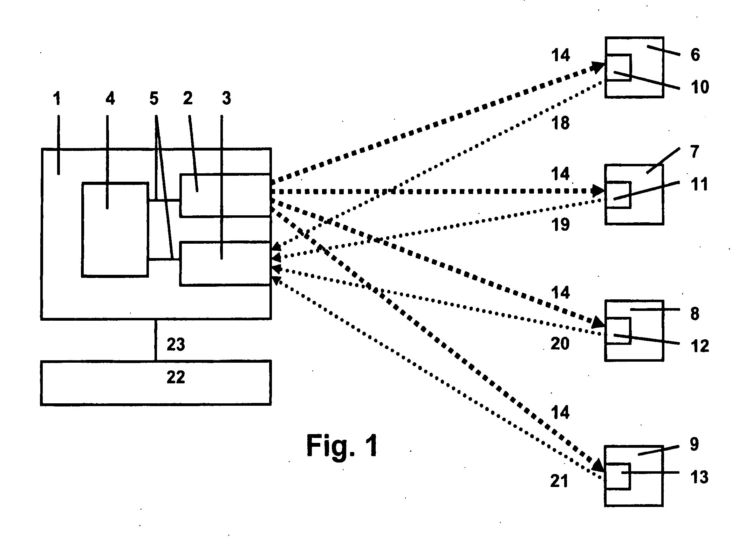

In Fig. 1 ist ein TDMA-Kommunikationssystem mit zwei Duplex-Funk-Sender/Empfängern zu einem bestimmten Zeitpunkt t1 dargestellt, bestehend aus
- einer Basisstation 1,
- einem ersten Knoten 6 mit einem Funk-Sender/Empfänger 10,
- einem zweiten Knoten 7 mit einem Funk-Sender/Empfänger 11,
- einem dritten Knoten 8 mit einem Funk-Sender/Empfänger 12,
- einem vierten Knoten 9 mit einem Funk-Sender/Empfänger 13 und
- einem Automatisierungsgerät (Speicherprogrammierbare Steuerung, Zentralrechner) 22.

Selbstverständlich ist eine Vielzahl weiterer (nicht dargestellter) Knoten vorgesehen. Es kann sich beispielsweise um ein TDMA-Kommunikationssystem handeln, bei welchem dreißig Knoten mit der Basisstation 1 kommunizieren. In jedem Fall handelt es sich um ein geschlossenes Kommunikationssystem mit genau vorgegebener maximaler Anzahl an Knoten.

Bei Ausbildung eines Knotens 6 - 9 als Sensor weist dieser einen die Sensorumgebung detektierenden Sensorkopf mit nachgeschalteter Signalauswertung auf. Bei Ausbildung eines Knotens 6 - 9 als Aktor weist dieser eine Aktoreinheit (beispielsweise ein Druckluftventil oder ein Schütz) sowie eine Ansteuereinheit hierfür auf.

Die Knoten 6 - 9 weisen ― wie vorstehend bereits erwähnt ― jeweils eine Kommunikationseinrichtung auf, welche den erforderlichen Funksender und Funkempfänger enthält, um derart eine drahtlose Kommunikation zwischen der Basisstation und den Knoten (und umgekehrt) zu ermöglichen. Die Kommunikation erfolgt auf den Teilnehmern bekannten Funkfrequenzen von der Basisstation zu den Knoten (Downlink) und auf den Teilnehmern bekannten, zu jedem Zeitpunkt hiervon unterschiedlichen Funkfrequenzen von den Knoten zur Basisstation (Uplink). Bei einem Sensor gelangt das aufbereitete Sensorsignal zu einem Modulator / Codierer mit nachgeschaltetem Funksender und Antenne, wo es an die Basisstation gesendet wird. Bei einem Aktor gelangt das von einer Basisstation gesendete Ansteuersignal über eine Antenne, einen Funkempfänger und einen Demodulator / Decodierer zur Ansteuereinheit.

### Die Basisstation 1

- empfängt Sensorsignale von Sensoren und Meldesignale betreffend den aktuellen Zustand von Aktoren (Uplink),
- gibt (kontinuierlich) Synchronisationssignale an Aktoren und Sensoren ab (Downlink),
- gibt Ansteuersignale zur Aktivierung/Deaktivierung von Aktoren ab (Downlink),
- gibt Signale zur Einstellung von spezifischen Parametern von Aktoren und Sensoren ab (Downlink).

Die Basisstation 1 weist einen ersten Duplex-Funk-Sender/Empfänger 2, einen zweiten Duplex-Funk-Sender/Empfänger 3 und eine digitale Ansteuerung 4 auf, welche über Steuer- und Datenleitungen 5 an die beiden Duplex-Funk-Sender/Empfängern 2, 3 angeschlossen ist. Selbstverständlich sind die Duplex-Funk-Sender/Empfänger jeweils mit den erforderlichen Demodulatoren / Decodierern, Modulatoren /Codierern und Antennen versehen. Das Automatisierungsgerät 22 ist über eine Verbindungsleitung 23 mit der Basisstation 1 verbunden. Je nach Anzahl der Knoten sind auch mehr als zwei Duplex-Funk-Sender/Empfänger 2, 3 vorhanden. Wichtig ist, dass die Zuordnung zwischen einem bestimmten Knoten und einem bestimmten Duplex-Funk-Sender/Empfänger sowohl hinsichtlich Uplink als auch hinsichtlich Downlink genau festgelegt wird.

Obwohl beispielsweise die (als Knoten eingesetzten) Sensoren ihre Nachrichten in zufälligen Augenblicken generieren, erfolgt eine strikt an den zugeordneten Zeitschlitz bzw. die zugeordneten Zeitschlitze angepasste Übertragung. Um sicherzustellen, dass die in einem Zeitschlitz enthaltene Information auch dem richtigen Aktor zugeordnet wird, bzw. um sicherzustellen, dass ein Sensor die der Basisstation zu übermittelnde Information während des richtigen Zeitschlitzes absendet, enthält jeder Zeitschlitz ein typisches Synchronisationswort zur exakten Synchronisierung zwischen Basisstation einerseits und Knoten andererseits. Der Empfänger der Basisstation kann aus der jedem Zeitschlitz zugeordneten Nummer unverwechselbar den jeweiligen Funksender, d. h. den relevanten Knoten bestimmen.

Der Duplex-Funk-Sender/Empfänger 2 gibt auf einer bestimmten Funkfrequenz (die Sender und Empfängern bekannt ist) Downlink-Signale (insbesondere Synchronisationssignale) 14 an die Funk-Sender/Empfänger 10, 11, 12, 13 der Knoten 6, 7, 8, 9 ab.

Der Duplex-Funk-Sender/Empfänger 3 empfängt auf einer anderen Funkfrequenz (die den Sendern und dem Empfänger bekannt ist) Uplink-Signale (insbesondere Meldesignale) 18 bzw. 19 bzw. 20 bzw. 21 vom Funk-Sender/Empfänger 10 bzw. 11 bzw. 12 bzw. 13 des Knotens 6 bzw. 7 bzw. 8 bzw. 9.

Wesentlich ist, dass jeder der Duplex-Funk-Sender/Empfänger 2, 3 die Eigenschaft hat,
- über seinen Empfänger in zugewiesenen Uplink-Slots (Zeitschlitze, Zeitfenster) Uplink-Signale empfangen zu können und
- über seinen Sender Downlink-Signale abgeben zu können.

Jeder Duplex-Funk-Sender/Empfänger (full duplex radio) ist zu einem bestimmten Zeitpunkt Sender (Downlink) oder Empfänger (Uplink). Durch diese Eigenschaften kann jeder der Duplex-Funk-Sender/Empfänger als "downlink oder uplink handler" eingesetzt weden, wodurch eine indirekte Antennendiversität erzielt wird.

Die digitale Ansteuerung 4 dient zur übergeordneten Koordination der eingesetzten Duplex-Funk-Sender/Empfänger, d. h. insbesondere zur Vorgabe der verwendeten Funk-Frequenzen und zur Vorgabe der Zeitfenster/Zeitschlitze des TDMA- Kommunikationssystem, die jedem Knoten im Hinblick auf die Kommunikation in Uplink und Downlink zugewiesen sind.

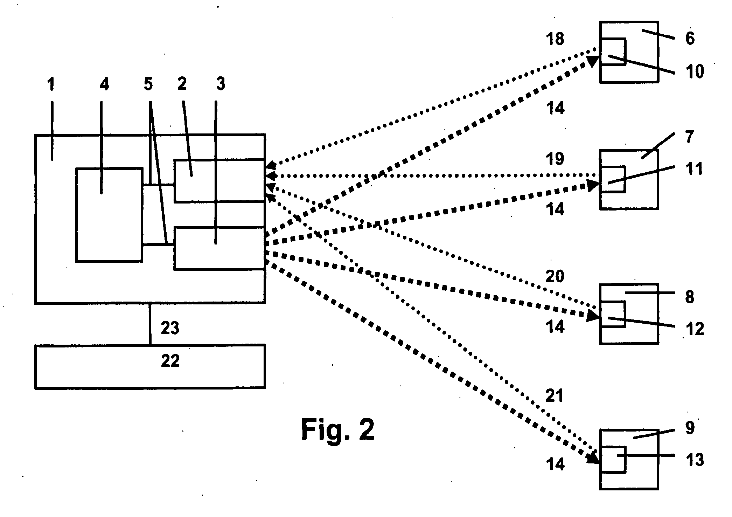

Fig. 2 zeigt das TDMA-Kommunikationssystem mit zwei Duplex-Funk-Sender/Empfängern zu einem bestimmten Zeitpunkt t1 + t_{framelänge,} wobei t_{framelänge} der Zeitdauer eines TDMA-Datenübertragungsblocks (frame) entspricht.

Der Duplex-Funk-Sender/Empfänger 3 gibt auf einer bestimmten Funkfrequenz (die Sender und Empfängern bekannt ist) Downlink-Signale (insbesondere Synchronisationssignale) 14 an die Funk-Sender/Empfänger 10, 11, 12, 13 der Knoten 6, 7, 8, 9 ab.

Der Duplex-Funk-Sender/Empfänger 2 empfängt auf einer anderen Funkfrequenz (die den Sendern und dem Empfänger bekannt ist) Uplink-Signale (insbesondere Meldesignale) 18 bzw. 19 bzw. 20 bzw. 21 vom Funk-Sender/Empfänger 10 bzw. 11 bzw. 12 bzw. 13 des Knotens 6 bzw. 7 bzw. 8 bzw. 9.

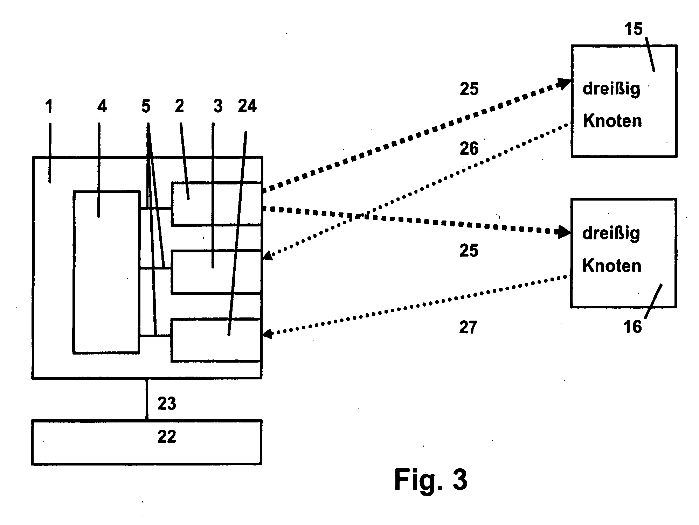

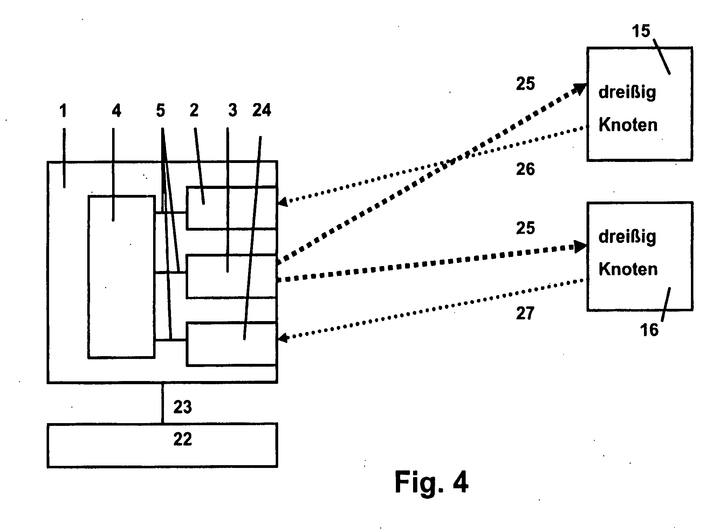

Bei einem TDMA-Kommunikationssystem mit sechzig Knoten ― siehe die Fig. 3 und 4 ― werden beispielsweise drei unterschiedliche, zeitgleich auftretende TDMA-Datenübertragungsblöcke generiert,
- welche jeweils zu jedem Zeitpunkt unterschiedliche Funkfrequenzen aufweisen,
- welche jeweils eine definierte Anzahl von Zeitschlitzen mit definierter Länge aufweisen,
- bei welchen die Länge der Zeitschlitze für Uplink und Downlink verschieden sein kann,
- bei welchen Uplink-Block (TDMA-Datenübertragungsblock) und Downlink-Block (TDMA-Datenübertragungsblock) gleich lang sind (Framelänge).

Die Fig. 3 und 4 zeigen eine Ausführungsform, bei welcher eine Basisstation mit drei Duplex-Funk-Sender/Empfängern 2, 3, 24 versehen ist,
- wobei zu einem bestimmten Zeitpunkt t1 (siehe Fig. 3) der Duplex-Funk-Sender/Empfänger 2 Downlink-Signale 25 an die Knoten der beiden Gruppen 15, 16 (jeweils dreißig Knoten enthaltend) absendet, der Duplex-Funk-Sender/Empfänger 3 Uplink-Signale 26 der Knoten der Gruppe 15 empfängt und der Duplex-Funk-Sender/Empfänger 24 Uplink-Signale 27 der Knoten der Gruppe 16 empfängt,
- wobei zu einem bstimmten Zeitpunkt t1 + t_{framelänge} (siehe Fig. 4) der Duplex-Funk-Sender/Empfänger 3 Downlink-Signale 25 an die Knoten der beiden Gruppen 15, 16 (jeweils dreißig Knoten enthaltend) absendet, der Duplex-Funk-Sender/Empfänger 2 Uplink-Signale 26 der Knoten der Gruppe 15 empfängt und der Duplex-Funk-Sender/Empfänger 24 Uplink-Signale 27 der Knoten der Gruppe 16 empfängt.

Wie bereits eingangs ausgeführt, ist das vorgeschlagene TDMA-Kommunikationssystem hinsichtlich seiner Systemkapazität äußerst variabel, d. h. die Anzahl der in der Basisstation eingesetzten Duplex-Funk-Sender/Empfänger richtet sich nach der Anzahl der Knoten des Systems respektive nach der Anzahl der Downlink-Gruppen und der Anzahl der Uplink-Gruppen. Wird das TDMA-Kommunikationssystem zu einem späteren Zeitpunkt um weitere Knoten ― beispielsweise um weitere dreißig Knoten ― erweitert, wird die Basisstation mit einem vierten Duplex-Funk-Sender/Empfänger 29 ausgestattet. Weitere Erweiterungen sind in gleicher Art und Weise möglich.

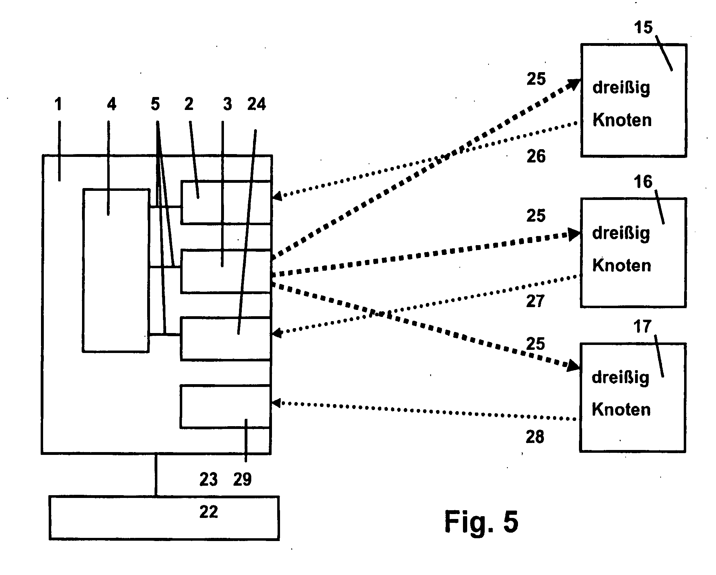

Fig. 5 zeigt hierzu ein Ausführungsbeispiel eines TDMA-Kommunikationssystems mit vier Duplex-Funk-Sender/Empfängern 2, 3, 24, 29 wobei zu dem dargestellten Zeitpunkt
- der erste Duplex-Funk-Sender/Empfänger 2 mit der ersten Gruppe 15 von dreißig Knoten kommuniziert und hierzu auf einer ersten Funkfrequenz Uplink-Signale 26 empfängt,
- der zweite Duplex-Funk-Sender/Empfänger 3 auf einer zweiten Funkfrequenz Downlink-Signale 25 an alle Knoten abgibt,
- der dritte Duplex-Funk-Sender/Empfänger 24 mit der zweiten Gruppe 16 von dreißig Knoten kommuniziert und hierzu auf einer dritten Funkfrequenz Uplink-Signale 27 empfängt,
- der vierte Duplex-Funk-Sender/Empfänger 29 mit der dritten Gruppe 17 von dreißig Knoten kommuniziert und hierzu auf einer vierten Funkfrequenz Uplink-Signale 28 empfängt.

Bedingt durch die Kapazität des Downlink-Telegramms, auf das sich die Teilnehmer (Knoten) aufsynchronisieren, wird ab einer bestimmten Anzahl von Teilnehmern die Notwendigkeit eines zweiten Downlink-Kanals erreicht, d. h. die Basisstation 1 ist mit einem weiteren Duplex-Funk-Sender/Empfänger zu versehen. Durch den Einsatz weiterer Duplex-Funk-Sender/Empfänger kann das System auch hinsichtlich dieser Grenze flexibel und bedarfsweise auch nachträglich erweitert werden.

### Bezugszeichenliste:

- 1: Basisstation
- 2: erster Duplex-Funk-Sender/Empfänger
- 3: zweiter Duplex-Funk-Sender/Empfänger
- 4: digitale Ansteuerung
- 5: Steuer- und Datenleitungen
- 6: Knoten (Sensor oder Aktor)
- 7: Knoten (Sensor oder Aktor)
- 8: Knoten (Sensor oder Aktor)
- 9: Knoten (Sensor oder Aktor)
- 10: Funk-Sender/Empfänger
- 11: Funk-Sender/Empfänger
- 12: Funk-Sender/Empfänger
- 13: Furik-Sender/Empfänger
- 14: Downlink-Signal
- 15: Gruppe
- 16: Gruppe
- 17: Gruppe
- 18: Uplink-Signal
- 19: Uplink-Signal
- 20: Uplink-Signal
- 21: Uplink-Signal
- 22: Automatisierungsgerät (Speicherprogrammierbare Steuerung, Zentralrechner)
- 23: Verbindungsleitung
- 24: dritter Duplex-Funk-Sender/Empfänger
- 25: Downlink-Signale
- 26: Uplink-Signale
- 27: Uplink-Signale
- 28: Uplink-Signale
- 29: vierter Duplex-Funk-Sender/Empfänger

## Patentansprüche

1. Basisstation eines gemäß TDMA (Time Division Multiple Access) betriebenen Funk-Kommunikationssystems mit einer vorgegebenen und genau bekannten Anzahl von Knoten (6 - 9), wobei die Basisstation (1) mit einem Automatisierungsgerät (22) verbunden ist, **dadurch gekennzeichnet, dass** die Basisstation (1) mindestens zwei Duplex-Funk-Sender/Empfänger (2, 3) aufweist, welche mittels einer gemeinsamen digitalen Ansteuerung (4) koordiniert ansteuerbar sind, wobei zu einem bestimmten ersten Zeitpunkt (t1)
- der erste Duplex-Funk-Sender/Empfänger (2) auf einer ersten Funkfrequenz Downlink-Signale (14) an vorgegebene Knoten (6, 7, 8, 9) abgibt,
- der zweite Duplex-Funk-Sender/Empfänger (3) auf einer zweiten Funkfrequenz Uplink-Signale (18,19,20,21) von vorgegebenen Knoten (6, 7, 8, 9) empfängt,
- wobei die Duplex-Funk-Sender/Empfänger (2, 3) jeweils zu einem bestimmten zweiten Zeitpunkt (t1 + t_{framelänge}) nach Ablauf einer Framelänge (t_{framelänge}), d. h. der Länge eines TDMA-Datenübertragungsblocks, vom Sende- in den Empfangsbetrieb und umgekehrt umschalten und
- der erste Duplex-Funk-Sender/Empfänger (2) auf einer ersten Funkfrequenz Uplink-Signale (18, 20) von vorgegebenen Knoten (6, 7, 8, 9) empfängt sowie
- der zweite Duplex-Funk-Sender/Empfänger (3) auf einer zweiten Funkfrequenz Downlink-Signale (14) an vorgegebene Knoten (6, 7, 8, 9) abgibt.

2. Basisstation nach Anspruch 1, **dadurch gekennzeichnet, dass** bei Erweiterung des Funk-Kommunikationssystems um weitere Knoten respektive eine weitere Uplink-Gruppe oder Downlink-Gruppe mindestens ein weiterer Duplex-Funk-Sender/Empfänger (24, 29) vorgesehen ist, welcher zu einem bestimmten Zeitpunkt Downlink-Signale abgibt oder Uplink-Signale (27, 28) empfängt, deren Funkfrequenzen unterschiedlich zu den Funkfrequenzen der Uplink-Signale (18, 19, 20, 21, 26) der weiteren Duplex-Funk-Sender/Empfänger (2, 3) sind.

## Claims

1. A base station of a radio communications system operated according to TDMA (Time Division Multiple Access) with a predetermined and precisely known number of nodes (6 - 9, with the base station (1) being in connection with an automation device (22), **characterized in that** the base station (1) comprises at least two duplex radio transmitters/receivers (2, 3) which can be triggered in a coordinated manner by means of a common digital drive module (4), and at a first time (t1)
- the first duplex transmitter/receiver (2) transmitting downlink signals (14) to predetermined nodes (6, 7, 8, 9) on a first radio frequency;
- the second duplex transmitter/receiver (3) receiving uplink signals (18, 19, 20, 21) from predetermined nodes (6, 7, 8, 9) on a second radio frequency;
- with the duplex radio transmitters/receivers (2, 3) each switching over at a specific second time (t1 + t_{framelength}) after expiration of a frame length (t_{framelength}), i.e. the length of the TDMA data transmission block, from transmitting to receiving operations and vice-versa, and
- the first duplex radio transmitter/receiver (2) receiving uplink signals (18, 20) from predetermined nodes (6, 7, 8, 9) on a first radio frequency, and
- the second duplex radio transmitter/receiver (3) transmitting downlink signals (14) to predetermined nodes (6, 7, 8, 9) on a second radio frequency.

2. A base station according to claim 1, **characterized in that** upon extending the radio communications system by further nodes or a further uplink group or downlink group, at least one further duplex radio transmitter/receiver (24, 29) is provided which at a certain time transmits downlink signals or receives uplink signals (27, 28) whose radio frequencies differ from the radio frequencies of the uplink signals (18, 19, 20, 21, 26) of the further duplex radio transmitters/receivers (2, 3).

## Revendications

1. Station de base d'un système de radiocommunications fonctionnant selon le principe de TDMA (AMRT - accès multiple à répartition dans le temps) avec un nombre prédéterminé et exactement connu de noeuds (6-9), la station de base (1) étant reliée à un appareil d'automatisation (22), **caractérisée en ce que** la station de base (1) comporte au moins deux émetteurs-récepteurs radio duplex (2, 3) qui peuvent être activés de manière coordonnée au moyen d'une commande numérique commune (4), de sorte qu'à un certain instant (t1) donné
- le premier émetteur-récepteur radio duplex (2) émet sur une première fréquence radio des signaux de liaison descendante (14) vers des noeuds (6, 7, 8, 9) prédéterminés,
- le deuxième émetteur-récepteur radio duplex (3) reçoit sur une deuxième fréquence des signaux de liaison ascendante (18, 19, 20, 21) en provenance de noeuds (6, 7, 8, 9) prédéterminés,
- les émetteurs-récepteurs radio duplex (2, 3) commutant chacun à un deuxième instant donné (t1 + t_{durée trame}) après l'écoulement d'une durée de trame (t_{durée trame}), c'est-à-dire de la durée du bloc de transmission TDMA, du mode d'émission au mode de réception et vice versa, et
- le premier émetteur-récepteur radio duplex (2) recevant sur une première fréquence radio des signaux de liaison ascendante (18, 20) provenant de noeuds (6, 7, 8, 9) prédéterminés et
- le deuxième émetteurs-récepteurs radio duplex (3) émettant sur une deuxième fréquence radio des signaux de liaison descendante (14) vers des noeuds (6, 7, 8, 9) prédéterminés.

2. Station de base selon la revendication 1, **caractérisée en ce que** lorsque le système de radiocommunications est augmenté d'autres noeuds ou d'un autre groupe de liaison ascendante ou descendante, il est prévu au moins un autre émetteur-récepteur radio duplex (24, 29) qui émet à un instant donné des signaux de liaison descendante ou reçoit des signaux de liaison ascendante (27, 28) dont la fréquence est différente des fréquences radio des signaux de liaison ascendante (18, 19, 20, 21, 26) des autres émetteurs-récepteurs radio duplex (2, 3).
